# EUROPEAN PATENT SPECIFICATION

(11) **EP 1 646 329 B1**
(45) Date of publication and mention of the grant of the patent: **07.03.2007**
(21) Application number: 03817524.6
(22) Date of filing: 21.07.2003
(51) Int. Cl.: A61C 7/12

(54) **BRACKET FOR ORTHODONTICS**
KLAMMER FÜR DIE KIEFERORTHOPÄDIE
VERROU D'ORTHODONTIE

(43) Date of publication of application: 19.04.2006
(73) Proprietor: Scuzzo, Giuseppe, 00122 Ostia Lido (IT)
(72) Inventor: Scuzzo, Giuseppe, 00122 Ostia Lido (IT)
(74) Representative: Papa, Elisabetta
(86) International application number: PCT/IT2003/000449
(87) International publication number: WO 2005/007010

(56) References cited:
- WO-A-02/03880
- US-A- 3 327 393
- US-A- 4 917 602
- US-A- 5 356 288
- US-A1- 2003 104 335

## Description

The present invention relates to a bracket for use in lingual orthodontics and to an orthodontic implant therefor. In particular, the invention relates to an orthodontic bracket of the type comprising a base adapted to be fastened onto the lingual side of a tooth, one or more engaging tabs to hold a fastening system for the dental arc and a housing for an orthodontic wire extending along the dental arc.

The term "lingual orthodontics" generally means the technique which consists of placing orthodontic implants on the lingual side of the teeth. Such implants typically consist of a plurality of brackets, each fastened to a respective tooth. Through these brackets is placed an orthodontic wire, in such a way that the wire extends along the dental arc. The orthodontic wire, which can have circular, square or rectangular cross section, and different metallic composition, is brought to a desired tensioning state, both for containment purposes and for corrective dental movements.

Lingual orthodontics offers important aesthetic and bio-mechanical advantages over labial orthodontics. Its implants are invisible from the exterior and, bio-mechanically, they entail advantages for the application of forces relative to the axis passing through the centre of resistance of the tooth. All with the same therapeutic results as traditional external (labial) orthodontic techniques.

However, currently available lingual brackets have some drawbacks. First of all, they do not allow a satisfactory control over rotation, due to the reduced flexural and torsional capabilities of the orthodontic wire, to the detriment of the therapeutic effects and of the time required to achieve them.

Moreover, they have rather large dimensions, in particular in terms of thickness, and this makes them not very comfortable for the patient in terms of tactile perception of the tongue and hygiene. Also because of such excessive dimensions, the patient generally experiences speech difficulties.

An example of a known bracket is disclosed in US-A-4 917 602. Such document discloses a bracket for orthodontic. Such device is an adjustable bracket assembly characterised in that its tabs are slidingly connected to the base in order to allow an adjustment of the device. Furthermore, all the embodiments therein disclosed have an housing for the archwire which is exactly perpendicular to the base, making it proper to be used as a labial bracket. Nevertheless, bearing in mind the natural conformation of the teeth (which have the lingual side inclined), the brackets therein disclosed cannot be correctly used as lingual brackets. In fact, once applied they would have the housing for the archwire not correctly oriented with respect to the overall direction of the tooth, being it perpendicular to the surface of the base.

The technical problem constituting the basis for the present invention, therefore, is to provide an orthodontic bracket which allows to overcome the drawbacks mentioned above with reference to the prior art.

Said problem is solved by an orthodontic bracket according to claim 1.

According to the same inventive concept, the present invention also relates to an orthodontic implant according to claim 15.

Preferred characteristics of the present invention are set out in the dependent claims thereof.

The present invention achieves some considerable advantages.

The main advantage consists in the fact that the invention, by virtue of the construction and arrangement of the member for retaining the orthodontic wire, allows to obtain an optimal torsional and flexural rotational mobility of the wire itself within its own housing, yet it does not allow the wire to move in the direction of extraction (exit) from the housing or to become misaligned relative to the dental arc.

This allows to achieve an optimal therapeutic result in terms of dental alignment and corrections of patho-occlusions, as well as a reduction in the times required to obtain said desired therapeutic result.

Moreover, the arrangement of the invention allows to obtain a substantial reduction in the dimensions, and above all in the thickness, of the bracket itself, to the advantage of motion bio-mechanics and patient comfort in terms of tactile perception and speech. All this clearly also improves the patient's acceptance of the implant.

Other advantages, characteristics and the manners of employing the present invention shall become more readily apparent from the detailed description that follows of some embodiments, provided purely by way of non limiting example. Reference shall be made to the figures of the accompanying drawings, in which:
Figure 1 shows a perspective view of a first embodiment of the orthodontic bracket according to the present invention;
Figure 2 shows another perspective view of the orthodontic bracket of Figure 1 during its use in a lingual orthodontic implant;
Figure 3 shows a side view of the orthodontic bracket of Figure 2;
Figure 4 shows a perspective view of an orthodontic implant comprising a plurality of brackets like the one of Figure 1; and
Figure 5 shows a lateral perspective view of the orthodontic bracket of Figure 1 compared with a prior art bracket.

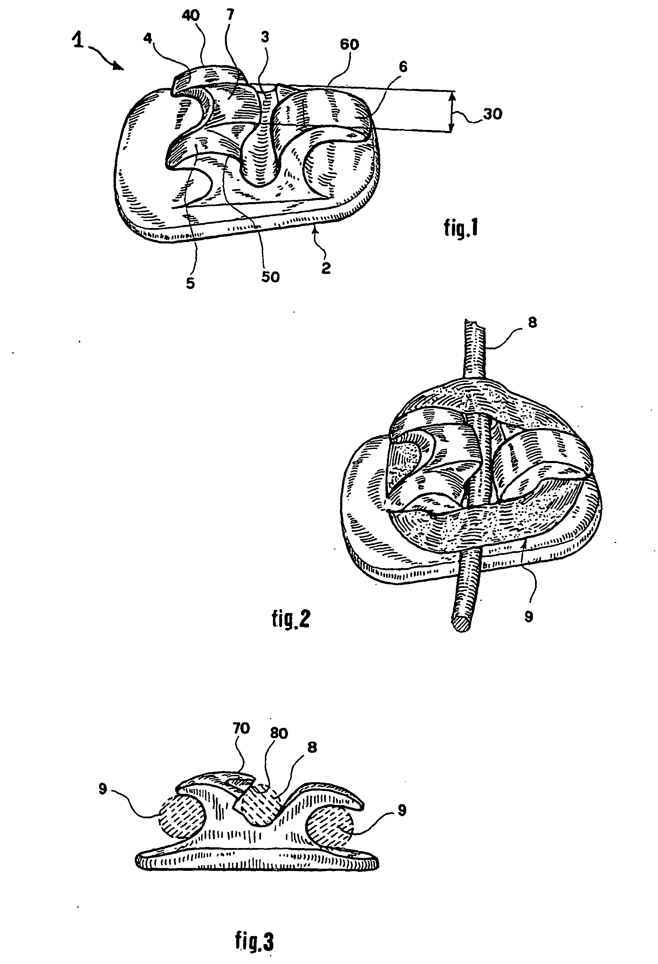

With reference initially to Figures 1, 2 and 3, a bracket for lingual orthodontics according to the invention is globally designated as 1.

The orthodontic bracket 1 comprises a base 2 adapted to be fastened onto the lingual side of a tooth by means of conventional techniques, for instance by means of gluing. In the present embodiment, the base 2 has, when seen in plan view, a substantially trapezoidal profile with rounded angles.

The orthodontic bracket 1 further comprises a main body 20 rising from the base 2. The body 20 and the base 2, i.e. the whole bracket 1, are integral one with the other, and in particular constructed in a single piece.

On the body 20, in slightly raised position relative to the base 2, is obtained a housing 3 apt to receive an orthodontic wire 8, the latter shown in dashed lines in Figure 3. In particular, said housing is in the form of a groove extending transversely relative to the base 2.

The housing 3 is apt to house orthodontic wires with circular cross section or with rectangular and/or square cross section, depending on the treatment stage and typology.

Preferably, for reasons which shall become readily apparent later on, the housing 3 is defined by two or more walls set longitudinally side by side, hence having in this case a cross section whose profile is a broken line rather than round.

The body 20 further comprises three engaging tabs projecting outwardly and able to engage and hold a system for binding the dental arc. More specifically, the bracket 1 comprises a first tab 4 and a second tab 5 substantially parallel and side by side with respect to each other and a third tab 6 arranged at the opposite side of the housing 3 relative to the other two tabs 4 and 5.

Each tab 4, 5 or 6 has a curved profile in order to more effectively perform its holding function and for a lower tactile perception of the patient's tongue.

The main body 20 further comprises a member 7 for retaining the orthodontic wire within the housing 3. In the present embodiment, the retaining member 7 is in the form of a protruding wedge-shaped fin positioned superiorly to the tabs 4, 5 and 6 and in a centred position relative to the housing 3. In particular, the member 7 is interposed between the first and the second tab 4 and 5 and oriented towards the opposite side with respect thereto.

According to the invention, the member 7 faces the housing 3 and extends only along a limited segment thereof, which segment is designated with an arrow 30 in Figure 1.

As mentioned above, with the construction just described the bracket 1 can have thickness, defined as dimension comprised between the base 2 and the retaining member 7, within an interval of about 1+1.2 mm.

The smaller thickness allowed by the bracket of the invention with respect to the prior art systems can be better appreciated also with reference to Figure 5, in which the device 1 is shown next to a conventional device (lingual orthodontic bracket), i.e. the 7^{th} generation ORMCO Kurz.

Preferably, both the retaining member 7 and the tabs 4, 5 and 6 have a rounded outer profile, designated respectively by 40, 50, 60 and 70, apt not to injure the patient's tongue when the bracket 1 is fastened onto one of his/her teeth.

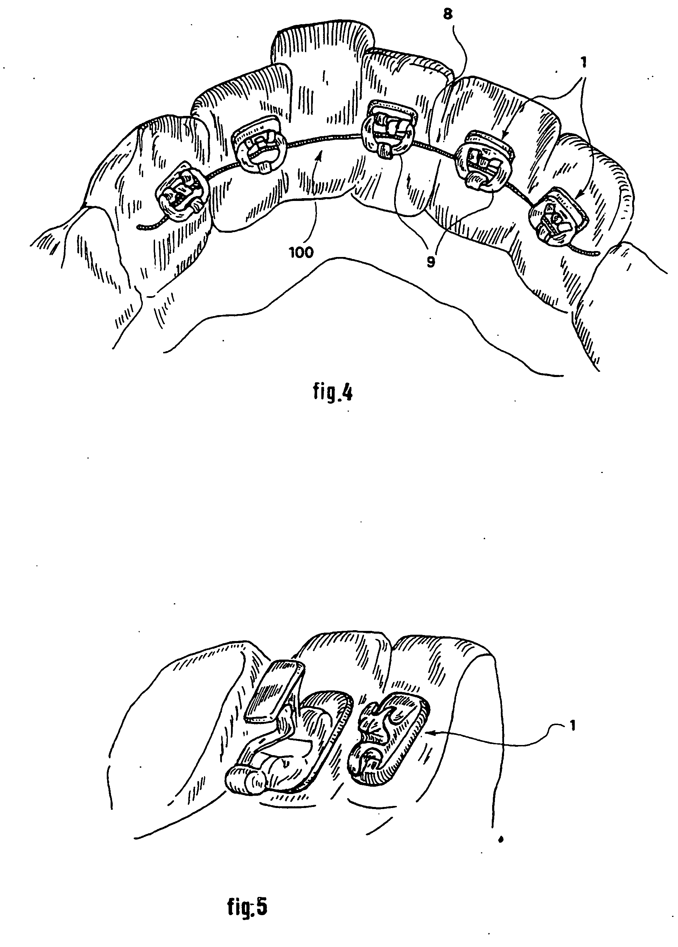

The manners of employing the invention shall now be illustrated with reference also to Figure 4, which shows an orthodontic implant, globally designated by the reference 100, comprising a plurality of brackets 1 of the type described herein.

Each bracket 1 is fastened on the lingual side of a respective tooth in correspondence with its own base 2 by means of conventional techniques.

The orthodontic wire 8 is then received within the housing 3 of each bracket 1.

The wire 8 can have a round or polygonal, and in particular square or rectangular, cross section. In particular, the wire 8 can have square cross section with a thickness of about 0.445 mm (0.0175 inches), and be made of a titanium-molybdenum or nickel-titanium alloy enabling torsion control, if needed.

By virtue of the conformation of the housing 3, the wire 8, if it has circular cross section, has a substantially linear instead of superficial contact with the walls of the housing 3. In this way, the friction associated with the coupling between wire 8 and housing 3 is reduced.

Moreover, as is more readily apparent from Figure 3, an upper portion 80 of the wire segment 8 received in the housing 3 abuts against the retaining member 7. As stated previously, the member 7 is in contact only with a central portion of the segment of wire 8 received in the housing 3. This causes the wire 8 to be free in correspondence of the lateral ends of said segment, to the advantage of its flexural and torsional rotation mobility. At the same time, the abutment coupling between member 7 and wire 8 is effective in preventing movements of the wire 8 which tend to extract it from the housing 3.

Additionally, the tabs 4, 5 and 6 of each bracket 1 are engaged by an annular member 9 which provides a binding system for the arc. Said annular member can be, depending on the case, elastic or rigid, plastic or metal, and so on.

To the tabs 4, 5 and 6 can also be engaged little elastic chains which serve the function of binding the arc and, simultaneously, of providing containment (traction) between the brackets of the neighbouring teeth, in order to move whole groups of teeth or to make them approach each other.

It will be readily appreciated that the choice to use three engaging tabs to bind the arc allows a further reduction in the friction of the orthodontic wire in its own housing during the dental movements.

At this point it will also be more readily appreciated that the bracket of the invention allows to fully exploit the advantages of lingual implants, allowing to obtain a treatment that lasts the shortest possible time and limits the physical and psychological discomfort of the patient.

Furthermore, the reduced dimensions of the bracket of the invention, compared to those of the prior art, allow, among other advantages, to increase the distance between adjacent brackets of the implant 100, and hence to further increase the flexibility of the orthodontic wires, with the result of a greater velocity of the dental movement, of greater control over rotation with a consequent reduction in treatment times.

Moreover, the orthodontic implant of the invention allows:
- an easy direct or indirect mounting with or without the procedure for positioning the brackets on a customised ideal model, originating from the patho-occlusion, all in accordance with a treatment plan for what pertains to the dental movements on the three spatial planes (set-up);
- an easy use of metallic and/or elastic bindings and of elastic tractions (little chains) - use of the elastic binding makes work faster and facilitates the patient's adaptation; and
- a similar or even identical shape of the bracket for nearly all teeth of the upper and lower front sectors: a simplification is thereby obtained in terms of applicability and hence operability with a consequent cost reduction.

It will also be readily apparent that the present invention can be subject to numerous embodiments and variants, alternative to those described heretofore.

The present invention has been described thus far with reference to preferred embodiments. It is understood that there may be other embodiments which relate to the same inventive concept, all comprised within the scope of protection of the claims set out below.

## Claims

1. A lingual orthodontic bracket (1), comprising:
- a base (2) adapted to be fastened onto the lingual side of a tooth;
- a main body (2) raising from the base (2), said main body being constructed in a single piece with the base (2) and having a plurality of projecting engaging tabs (4, 5, 6) apt to engage and retain a binding system (9) for the dental arc;
- a housing (3) for an orthodontic wire (8) which extends along the dental arc, said housing (3) being interposed between the tabs (4, 5, 6);
- a retaining member (7) for retaining the orthodontic wire within said housing (3),
wherein said retaining member (7) faces said housing (3) and extends only along a limited segment (30) of the latter, the arrangement being such that said retaining member (7) abuts the orthodontic wire (8) received in said housing (3) by a surface inclined so as to form an acute angle with respect to the base (2), said acute angle opening towards the bottom of the tooth when the bracket is fastened onto the inclined lingual side of the tooth."

2. The orthodontic bracket (1) as coined in claim 1, wherein said retaining member is in the form of a projecting fin (7).

3. The orthodontic bracket (1) as claimed in claim 1 or 2, wherein said retaining member (7) has a substantially wedge shaped profile.

4. The orthodontic bracket (1) as claimed in any of the previous claims, wherein said retaining member (7) is in a centred position relative to said housing (3).

5. The orthodontic bracket (1) as claimed in any of the previous claims, wherein said retaining member (7) is integral with the remaining part of the bracket itself.

6. The orthodontic bracket (1) as claimed in any of the previous claims, wherein said retaining member (7) is constructed in a single piece with the remaining part of the bracket itself.

7. The orthodontic bracket (1) as claimed in any of the previous claims, wherein said retaining member (7) is arranged superiorly to the tabs (4, 5, 6) of said plurality.

8. The orthodontic bracket (1) as claimed in any of the previous claims, wherein said retaining member (7) has a rounded profile (70) apt not to injure the patient's tongue.

9. The orthodontic bracket (1) as claimed in any of the previous claims, having a thickness, defined between said base (2) and said retaining member (7), included in an interval of about 1÷1.2 mm.

10. The orthodontic bracket (1) as claimed in any of the previous claims, wherein said plurality of tabs comprises a first (4), a second (5) and a third (6) tab, said first (4) and second (5) tab being arranged at the opposite side of said housing (3) with respect to said third tab (6).

11. The orthodontic bracket (1) as claimed in the previous claim, wherein said retaining member (7) is arranged between said first (4) and second (5) tab and is oriented in the opposite direction relative thereto.

12. The orthodontic bracket (1) as claimed in any of the previous claims,
wherein the tabs (4, 5, 6) of said plurality have a rounded profile (40, 50, 60) apt not to injure the patient's tongue.

13. The orthodontic bracket (1) as claimed in any of the previous claims,
wherein said housing (3) is in the form of a groove extending transversely relative to said base (2).

14. The orthodontic bracket (1) as claimed in any of the previous claims,
wherein said housing (3) is defined by two or more walls set longitudinally side by side, having a cross section with a broken-line profile.

15. An orthodontic implant (100) for lingual orthodontics, comprising an orthodontic bracket (1) as claimed in any of the previous claims.

16. The orthodontic implant (100) as claimed in the previous claim, comprising an orthodontic wire (8) apt to be inserted in said housing (3) and, in such an arrangement, to abut said retaining member (7).

## Patentansprüche

1. Linguale orthodontische Klammer (1), mit:
- einer Basis (2), die dafür ausgebildet ist, auf der Zungenseite eines Zahns befestigt zu werden;
- einem Hauptkörper (2), der sich von der Basis (2) erhebt, wobei der Hauptkörper einstückig mit der Basis (2) aufgebaut ist und mehrere vorstehende Erfassungsvorsprünge (4, 5, 6) hat, die in der Lage sind, ein Verbindungssystem (9) für den Dentalbogen zu erfassen und festzuhalten;
- einem Gehäuse (3) für einen orthodontischen Draht (8), der sich längs des Dentalbogens erstreckt, wobei das Gehäuse (3) zwischen den Vorsprüngen (4, 5, 6) angeordnet ist,
- einem Halteteil (7) zum Festhalten des orthodontischen Drahtes in dem Gehäuse (3),
wobei das Halteteil (7) dem Gehäuse (3) zugewandt ist und sich nur längs eines begrenzten Abschnittes (30) von letzterem erstreckt, wobei die Anordnung so getroffen ist, dass das Halteteil (7) an dem orthodontischen Draht (8), der in dem Gehäuse (3) aufgenommen ist, mit einer Fläche anliegt, die geneigt ist, so dass sie einen spitzen Winkel mit der Basis (2) bildet, wobei sich der spitze Winkel zu dem unteren Teil des Zahns hin öffnet, wenn die Klammer auf der geneigten Zungenseite des Zahns befestigt ist.

2. Orthodontische Klammer (1) nach Anspruch 1, wobei das Halteteil die Form einer vorstehenden Rippe (7) hat.

3. Orthodontische Klammer (1) nach Anspruch 1 oder 2, wobei das Halteteil (7) ein im Wesentlichen keilförmiges Profil hat.

4. Orthodontische Klammer (1) nach einem der vorhergehenden Ansprüche, wobei das Halteteil (7) in einer mittigen Position relativ zu dem Gehäuse (3) ist.

5. Orthodontische Klammer (1) nach einem der vorhergehenden Ansprüche, wobei das Halteteil (7) integral mit dem übrigen Teil der Klammer selbst ausgebildet ist.

6. Orthodontische Klammer (1) nach einem der vorhergehenden Ansprüche, wobei das Halteteil (7) einstückig mit dem übrigen Teil der Klammer selbst aufgebaut ist.

7. Orthodontische Klammer (1) nach einem der vorhergehenden Ansprüche, wobei das Halteteil (7) höher als die mehreren Vorsprünge (4, 5, 6) angeordnet ist.

8. Orthodontische Klammer (1) nach einem der vorhergehenden Ansprüche, wobei das Halteteil (7) ein gerundetes Profil (70) hat, das die Zunge des Patienten nicht verletzt.

9. Orthodontische Klammer (1) nach einem der vorhergehenden Ansprüche, mit einer Dicke, die zwischen der Basis (2) und dem Halteteil (7) gemessen wird und in einem Bereich von etwa 1-1,2 mm liegt.

10. Orthodontische Klammer (1) nach einem der vorhergehenden Ansprüche, wobei die mehreren Vorsprünge einen ersten (4),einen zweiten (5) und einen dritten (6) Vorsprung umfassen, wobei der erste (4) und der zweite (5) Vorsprung auf der entgegen gesetzten Seite des Gehäuses (3) in Bezug auf den dritten Vorsprung (6) angeordnet sind.

11. Orthodontische Klammer (1) nach einem der vorhergehenden Ansprüche, wobei das Halteteil (7) zwischen dem ersten (4) und dem zweiten (5) Vorsprung angeordnet ist und in Bezug auf diese in der entgegengesetzten Richtung orientiert ist.

12. Orthodontische Klammer (1) nach einem der vorhergehenden Ansprüche, wobei die mehreren Vorsprünge (4, 5, 6) ein gerundetes Profil (40, 50, 60) haben, so dass sie die Zunge des Patienten nicht verletzen.

13. Orthodontische Klammer (1) nach einem der vorhergehenden Ansprüche, wobei das Gehäuse (3) die Form einer Nut hat, die sich relativ zu der Basis (2) quer erstreckt.

14. Orthodontische Klammer (1) nach einem der vorhergehenden Ansprüche, wobei das Gehäuse (3) durch zwei oder mehr als zwei Wände gebildet ist, die longitudinal nebeneinander gesetzt sind, so dass ein Querschnitt mit einem unterbrochenen Linienprofil gebildet ist.

15. Orthodontisches Implantat (100) für die linguale Kieferorthopädie, mit einer orthodontischen Klammer (1) nach einem der vorhergehenden Ansprüche.

16. Orthodontisches Implantat (100) nach dem vorhergehenden Anspruch, mit einem orthodontischen Draht (8), der dafür vorgesehen ist, in das Gehäuse (3) eingeführt zu werden und sich in einer solchen Anordnung an das Halteteil (7) anzulegen.

## Revendications

1. Support orthodontique lingual (1), comportant :
- une base (2) adaptée pour être fixée sur le côté lingual d'une dent,
- un corps principal (2) montant à partir de la base (2), ledit corps principal étant réalisé en une seule pièce avec la base (2), et ayant une pluralité de pattes de mise en prise faisant saillie (4, 5, 6) aptes à venir en prise avec un système de fixation (9) pour l'arc dentaire et à le retenir,
- un logement (3) pour un fil orthodontique (8) qui s'étend le long de l'arc dentaire, ledit logement (3) étant interposé entre les pattes (4, 5, 6),
- un élément de retenue (7) pour retenir le fil orthodontique dans ledit logement (3),
dans lequel ledit élément de retenue (7) est en vis-à-vis dudit logement (3), et s'étend uniquement le long d'un segment limité (30) de ce dernier, l'agencement étant tel que ledit élément de retenue (7) vient en butée contre le fil orthodontique (8) reçu dans ledit logement (3) par une surface inclinée de manière à former un angle aigu par rapport à la base (2), ledit angle aigu s'ouvrant vers la partie inférieure de la dent lorsque le support est fixé sur le côté lingual incliné de la dent.

2. Support orthodontique (1) selon la revendication 1, dans lequel ledit élément de retenue a la forme d'une ailette faisant saillie (7).

3. Support orthodontique (1) selon la revendication 1 ou 2, dans lequel ledit élément de retenue (7) a un profil sensiblement en forme de cale.

4. Support orthodontique (1) selon l'une quelconque des revendications précédentes, dans lequel ledit élément de retenue (7) est dans une position centrée par rapport audit logement (3).

5. Support orthodontique (1) selon l'une quelconque des revendications précédentes, dans lequel ledit élément de retenue (7) est en un seul bloc avec la partie restante du support lui-même.

6. Support orthodontique (1) selon l'une quelconque des revendications précédentes, dans lequel ledit élément de retenue (7) est réalisé en une seule pièce avec la partie restante du support lui-même.

7. Support orthodontique (1) selon l'une quelconque des revendications précédentes, dans lequel ledit élément de retenue (7) est agencé au-dessus des pattes (4, 5, 6) de ladite pluralité.

8. Support orthodontique (1) selon l'une quelconque des revendications précédentes, dans lequel ledit élément de retenue (7) a un profil arrondi (70) apte à ne pas blesser la langue du patient.

9. Support orthodontique (1) selon l'une quelconque des revendications précédentes, ayant une épaisseur, définie entre ladite base (2) et ledit élément de retenue (7), incluse dans un intervalle d'environ 1 ÷ 1,2 mm.

10. Support orthodontique (1) selon l'une quelconque des revendications précédentes, dans lequel ladite pluralité de pattes comportent des première (4), deuxième (5) et troisième (6) pattes, lesdites première (4) et deuxième (5) pattes étant agencées au niveau du côté opposé dudit logement (3) par rapport à ladite troisième patte (6).

11. Support orthodontique (1) selon la revendication précédente,
dans lequel ledit élément de retenue (7) est agencé entre lesdites première (4) et deuxième (5) pattes, et est orienté dans la direction opposée par rapport à celles-ci.

12. Support orthodontique (1) selon l'une quelconque des revendications précédentes, dans lequel les pattes (4, 5, 6) de ladite pluralité ont un profil arrondi (40, 50, 60) aptes à ne pas blesser la langue du patient.

13. Support orthodontique (1) selon l'une quelconque des revendications précédentes, dans lequel ledit logement (3) a la forme d'une gorge s'étendant transversalement par rapport à ladite base (2).

14. Support orthodontique (1) selon l'une quelconque des revendications précédentes, dans lequel ledit logement (3) est défini par deux parois ou plus établies longitudinalement cote à cote, ayant une coupe transversale avec un profil en ligne brisée.

15. Implant orthodontique (100) pour des éléments orthodontiques linguaux, comportant un support orthodontique (1) selon l'une quelconque des revendications précédentes.

16. Implant orthodontique (100) selon l'une quelconque des revendications précédentes, comportant un fil orthodontique (8) apte à être inséré dans ledit logement (3) et, dans un tel agencement, à venir en butée contre ledit élément de retenue (7).
